# EUROPEAN PATENT APPLICATION

(11) **EP 4 368 544 A1**
(43) Date of publication of application: **15.05.2024**
(21) Application number: 23209194.2
(22) Date of filing: 10.11.2023
(51) Int. Cl.: B65G 57/24

(54) **PALLETISING DEVICE**

(30) Priority: 10.11.2022 IT 202200023172
(71) Applicant: All Glass S.r.l., 43029 Traversetolo (PR) (IT)
(72) Inventor: ORLANDINI, Luigi, 43029 TRAVERSETOLO (PR) (IT); MELEGARI, Sandro, 43029 TRAVERSETOLO (PR) (IT)
(74) Representative: Fanzini, Valeriano

(57) **Abstract**

A palletising device (100) for picking up, transferring and depositing a layer of articles, comprising an upper head (10) for gripping articles, in turn comprising a frame (2) provided with an upper support (21) adapted to be coupled to a load-bearing structure, a support surface (3) adapted to supportingly receive the layer of articles, retaining means (4) placed above the support surface (3) and adapted to peripherally grasp said layer of articles, wherein the pick-up and/or deposit of the layer of articles occurs by means of a relative movement between the support surface (3) and the retaining means (4) generating the sliding of the layer on an upper surface (30) of the support surface (3), that said device (100) comprises a lower head (20) for gripping articles, preferably removably connected to the upper head (10), for picking up a layer of articles arranged below the support surface (3).

## Description

### APPLICATION FIELD OF THE INVENTION

The present invention relates to the field of palletising devices such as heads or units for palletising goods or articles, i.e., the arrangement thereof in an organised manner to allow the assembly and/or delivery thereof.

### STATE OF THE ART

Palletising takes place by creating overlapping stacks of articles or layers of articles, thus forming a so-called pallet on a base, for example, known as a pallet.

The first layer is generally deposited onto said pallet, or more generally onto a base. Other layers of articles, possibly separated by divider planes known as tier sheets, overlap said layer. This overlapping operation continues until making a pallet with the required height.

All of these operations require the use of operating machines, referred to as palletisers.

For years now, it has been common practice to perform the palletising of an entire layer of objects, such as crates, bundles, or bottles, jars, etc., coming from one or more conveying lines and prepared on a forming plane at the end of the line and arranged to cover the surface of the pallet onto which they will be positioned.

In order to carry out the pick-up and dislocation of said layer, portal, rotating column, or anthropomorphic are used, which are provided with a palletising head adapted to pick up the entire layer and position it onto the pallet.

Said heads are adapted to pick up a layer of articles from a picking up surface from said forming plane and transfer it onto the top of the pallet in an ordered manner.

It is the object of the present invention a palletising device, for picking up, transferring and depositing an entire layer of products to be palletised.

The most used and known palletising heads are, for example, those referred to as push or support surface palletising heads.

Said heads provide for the insertion and handling of the objects to be palletised pushing them on a support surface of the head.

Said support surface can be of a flexible type, also referred to as a shutter support surface, or of a rigid type.

Said support surface, with which the head is equipped, is generally movable between a pick up position for supporting the articles, and a position for unloading articles.

Such a support surface, once the head has been positioned on the pallet, retracts, defining an opening in the lower portion of the head, so as to allow the article or layer of articles to fall onto the same pallet.

Loading by pushing the objects on the head can be carried out for example according two different methods, which both provide for pushing the layer from a forming plane of the line to the support surface of the head.

For example, a first method provides pushing means independent of the palletising head, usually mounted at the forming plane and which provided to load the layer of products by pushing them onto the support surface.

A second method provides for loading means housed on the same head that extend out as needed from the head and, centering themselves on the layer, call it back onto the support surface of the head. Therefore, in that case the head is brought nearer to the layer of stationary articles on the forming plane, with the loading means cantilevered relative to the head that perimetrically encircles the layer.

Said palletising head of the push type can process layers of articles, such as crates, bundles or bottles, jars, etc.

However, not all the articles can be palletised by means of pushing heads, as their configuration might cause instability and falls if subjected to pushing; with some articles, due to pushing, there could be the formation of disorganized layers.

For example, truncated-cone bottles, oval-shaped bottles or jars, or particularly delicate articles cannot be subjected to pushing and, therefore, cannot be handled with pushing heads.

In that case, so- called gripping palletising heads can be used. The gripping heads generally have a plurality of gripping elements. Said gripping elements are shaped to engage with the articles, assuming a pick-up configuration of said articles and adapted to disengage with the articles, assuming a release configuration.

Generally speaking, said gripping elements contact each article of the layer.

There are several types of gripping heads depending on the type of article they need to be engaged to.

For example, commonly used to palletise layers of bottles are those head in which the gripping elements are inflatable tubes adapted to position themselves between rows of the layer of articles, in particular between the necks of the bottles.

As known, said inflatable tubes take a pickup configuration of said articles when subjected to inflation or a release configuration when subjected to deflation.

Other known heads, for example used to palletise jars, comprise, as gripping elements, a plurality of clamps adapted to insert for example into the mouth of each jar of the layer or alternatively a plurality of suction cups adapted to insert into each jar and gripping the bottom of the jar or crating a vacuum at the jar mouth.

To those skilled in the art, for the bottles also heads are known that comprise, as the gripping elements, a plurality of inflatable bells that, upon inflation, embrace the neck of each bottle.

It can happen that a palletiser has to handle different articles that require different heads. For instance, articles that can only be handled by using the pushing head and others that can only be handled using the gripping head.

In that case, it is necessary to have a so-called format changeover. Said format changeover involves that, on a load-bearing structure of the gantry robot, rotary column, or anthropomorphic robot, etc., also referred to as the machine body in technical jargon, the disassembling the pushing head and mounting of the gripping head, or vice versa, are carried out.

The format change of the entire head is complex and requires significant downtime for the palletiser.

Moreover, changing the head involves that each head is complete with all the components for attaching to the machine body, and any translation means that enable each head to reach the pickup and deposit positions.

This makes the palletizer overall more expensive.

### DISCLOSURE AND ADVANTAGES OF THE INVENTION

The technical problem underlying the present invention is to provide a palletising device for picking up, transferring and depositing a layer of articles, structurally and functionally devised to overcome one or more of the limitations set forth above with reference to the cited prior art.

Within the scope of the mentioned issue, a primary object of the invention is to develop a palletizing device for picking up, transferring, and depositing a layer of articles that allows for reducing the format changeover times.

Further object of the invention is also to provide to the art a palletising device for picking up, transferring and depositing a layer of articles within the scope of a simple, rational solution with a relatively reduced cost.

Such and other objects are achieved through the features of the invention outlined in the independent claim 1. The dependent claims outline preferred and/or particularly advantageous aspects of the invention.

In particular, the present invention provides a palletising device for picking up, transferring and depositing a layer of articles, comprising an upper head for gripping articles.

In particular, said upper gripping head comprises in turn a frame provided with an upper support adapted to be coupled to a load-bearing structure, a support surface adapted to supportingly receive the layer of articles, retaining means placed above the support surface and adapted to peripherally grasp said layer of articles.

This solution allows to hold a layer of articles during the transport from the pick up to the deposit area.

Preferably, the pick-up and/or deposit of the layer of articles occurs by means of a relative movement between the support surface and the retaining means generating the sliding of the layer on an upper surface of the support surface.

Advantageously said device comprises a lower head for gripping articles for picking up a layer of articles arranged below the support surface.

By virtue of this solution, it is possible to pick up articles with two different pick up modes, the selection of which can be determined for example by the configuration of the article or the type of layer.

This allows for a very rapid and simple format change.

This solution could also allow picking up two overlapping layers or portions di layer by using the two heads simultaneously.

Said lower head for gripping articles is preferably removably connected to the upper head.

This allows working with only the upper head when it is possible to handle the articles by pushing, reducing the weight that the load-bearing structure has to handle.

The lower head preferably comprises a structure onto which a plurality of gripping elements adapted to engage with the articles, are installed, assuming a pick-up configuration of said articles and adapted to disengage with the articles, assuming a release configuration.

This allows for a suspended gripping of the articles.

In particular, the gripping elements are inflatable tubes adapted to position themselves between rows of the layer of articles and assume a pick-up configuration of said articles when subjected to inflation and a release configuration when subjected to deflation.

The lower head is preferably movable with respect to the upper head.

By virtue of this solution, there is a greater chance to reach the deposit and pick up areas, and therefore it allows an increased operational flexibility on the working positions.

In particular, it is movable between a position at which it is entirely inside the encumbrance area of the frame, and a position at which it is at least partially laterally projecting relative to the frame.

Said lower head preferably comprises a counter-frame connected to the frame and configured to removably receive the structure.

Preferably said counter-frame is configured to translate with respect to the frame.

Furthermore, the counter-frame is preferably configured to perform a telescopic translation.

By virtue of this solution, it is possible to increase the working strokes without overly reinforcing the mechanical structural integrity of the device.

According to an aspect of the invention the upper head for gripping articles and the lower head for gripping articles operate alternately.

By virtue of this solution, it's possible to operate with only one head at a time, which allows for the containment of the device's weight and an easy switch between the use of either head.

The support surface is optionally configured to translate on said frame between a position for supporting articles, and a position for unloading articles, defining an opening in the lower portion of the frame.

The retaining means are optionally configured to translate on said frame between a position entirely inside the frame and a position at least partly outside the frame for picking up and/or releasing articles.

In particular, the palletising device comprises drive means placed on the frame and configured to drive the retaining means and/or the lower head.

Advantageously said drive means comprise an exchange element movable between a first position in which it puts the drive means in connection with first transmission means to put the retaining means in translation, and a second position in which it puts the drive means in connection with second transmission means to put the lower head in translation.

By virtue of this solution, it is possible to reduce the costs for the drive means and to reduce the weight of the device.

The exchange element preferably comprises a lever rotatable around a fulcrum, said lever comprising a first end connected to an exchange gear and a second end connected to a cylinder, which passing from the extended position to the retracted position, rotates the lever causing the exchange gear to engage with a corresponding first gear of the first transmission means or to engage with a corresponding second gear of the second transmission means.

Said cylinder is preferably pneumatic. This allows for the creation of a simple and cost-effective solution.

Said objects and advantages are all achieved by the palletising device for picking up, transferring and depositing a layer of articles, which is the subject matter of the present invention, which is characterized in what has been provided for in the claims set forth herein below.

### BRIEF DESCRIPTION OF THE FIGURES

This and other characteristics will be further highlighted by the following description of some embodiments illustrate, by way of mere exemplary, non-limiting example in the attached drawing tables.
- Fig. 1a: illustrates an exploded axonometric view of the palletising device with the upper head in sight and the lower head in an assembling position below the frame 2;
- Fig. 1b: illustrates a different exploded axonometric view of the palletising device with the lower head in a cantilevered position relative to the frame 2;
- Fig. 2: illustrates an axonometric view of the palletising device with the upper head onto which the counter-frame 6 is mounted;
- Fig. 3a: illustrates a side view of the palletising device complete with the upper head and the lower head in a retracted position below the frame 2 with the exchange element in sight;
- Fig. 3b, 3c: illustrates a side view of the palletising device complete with the upper head and the lower head in cantilevered position relative to the frame 2 with the exchange element in the two working positions;

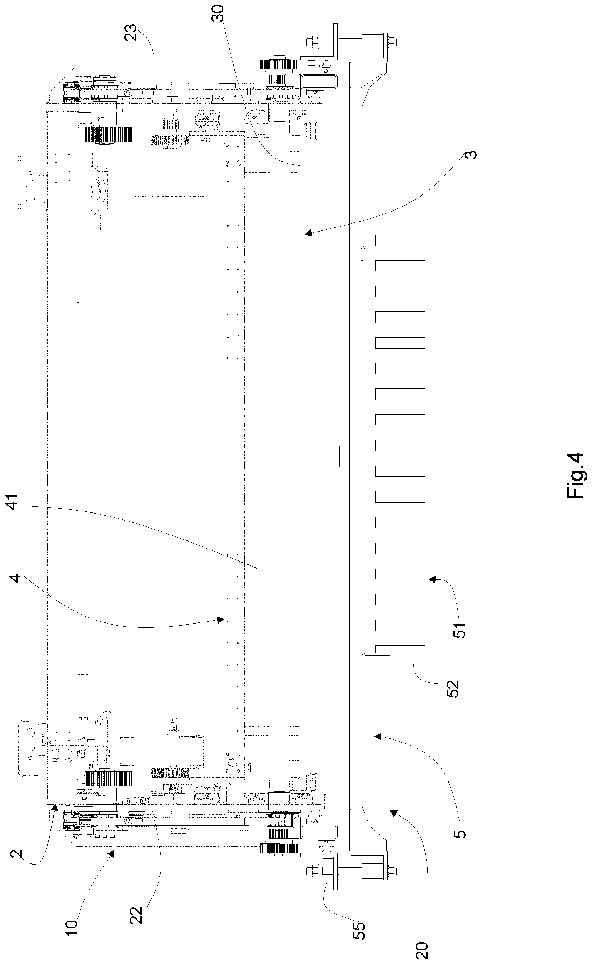

- Fig. 4: illustrates a front view of the palletising device complete with the upper head and the lower head;

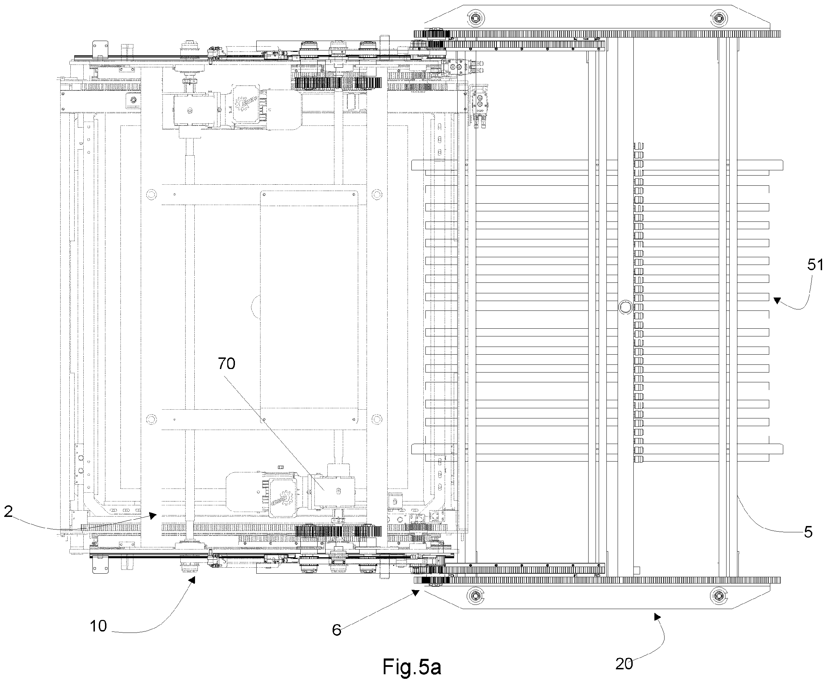

- Fig. 5a: illustrates a top view of the palletising device complete with the upper head and the lower head in cantilevered position relative to the frame 2;

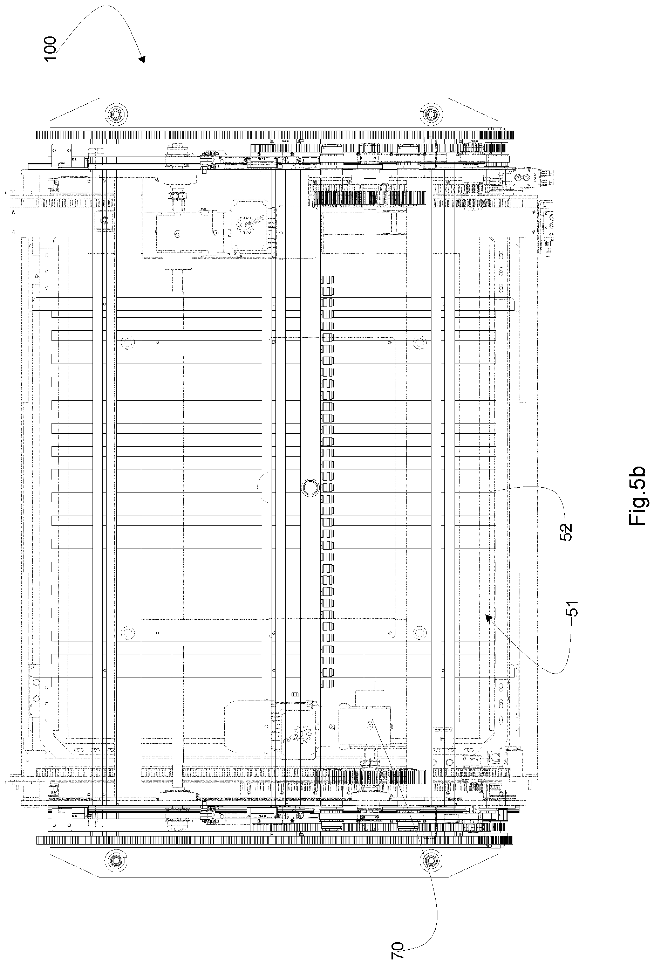

- Fig. 5b: illustrates a top view of the palletising device complete with the upper head and the lower head in an internal position relative to the frame 2;

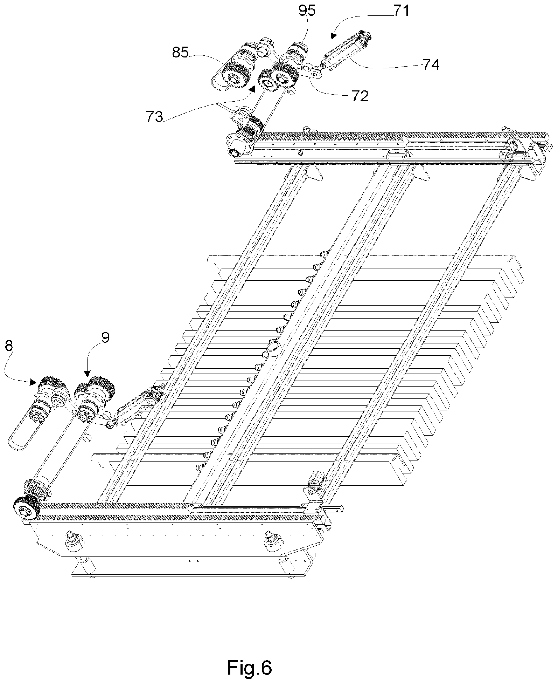

- Fig. 6: illustrates an axonometric view of the lower head in position below the frame 2 and with the second transmission means 9 and the exchange element;

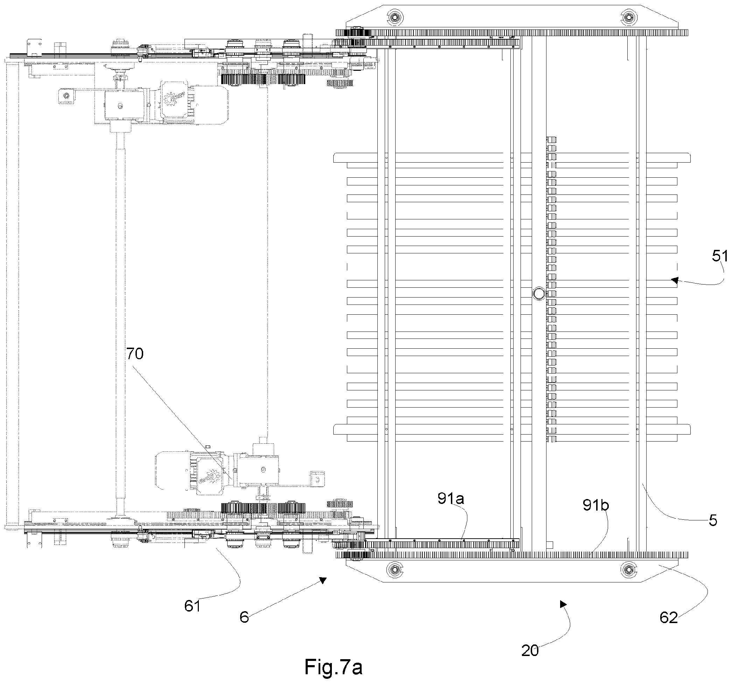

- Fig. 7a: illustrates a top view of the lower head in cantilevered position with the second transmission means 9 in vista;

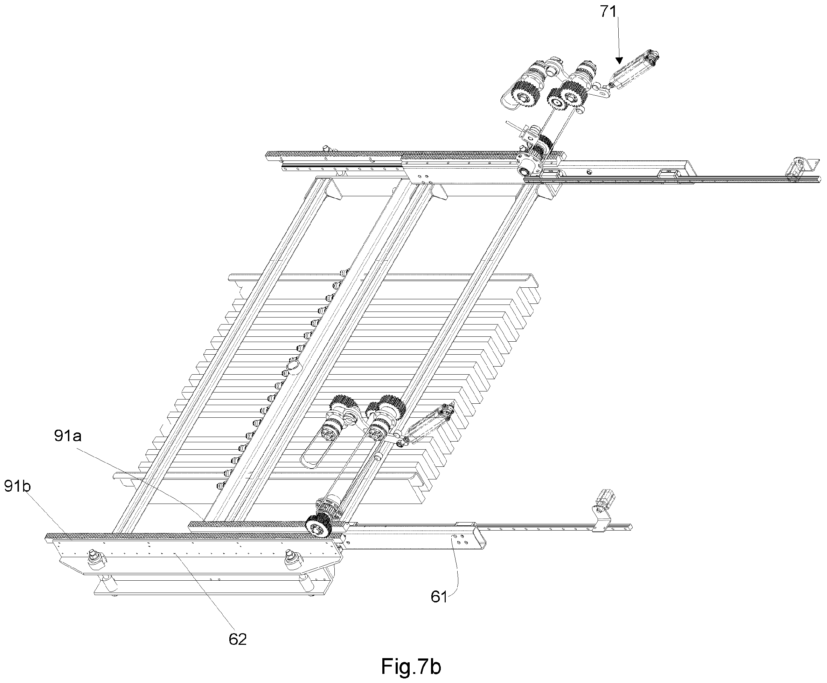

- Fig. 7b: illustrates a top axonometric view of the lower head in cantilevered position with the second transmission means 9 in sight.

### DESCRIPTION OF THE INVENTION

With particular reference to the figures, a palletising device 100 for picking up, transferring and depositing a layer of articles is illustrated.

In order to carry out the pick-up and movement of said layer, the palletising device 100 is installed on a load-bearing structure of a portal, rotary column, orthogonal column, or anthropomorphic robot, known to those skilled in the art.

Said load-bearing structure can be that of a portal robot, that brings the palletising device 100 between the layer gripping position and the layer deposit position by translating.

Generally, the load-bearing structure of a portal or orthogonal column robot provides for at least two translation movements that act on the palletising device 100:
- A vertical lifting to reach the various heights of the pallet onto which the layer is to be deposited;
- A horizontal translation to move between the pick-up and the deposit positions.

Optionally, a rotating movement can be provided to rotate the palletising device 100 about a vertical axis at an upper support 21 adapted to put the palletising device 100 in connection with the load-bearing structure.

Alternatively, the load-bearing structure can be that of a rotary column robot, which provides for bringing the palletising device 100 between the layer gripping position and the layer deposit position by rotation.

Generally, the load-bearing structure of a rotary column robot provides for at least two movement that act on the palletising device 100:
- A vertical lifting to reach the various heights of the pallet onto which the layer is to be deposited;
- A horizontal rotation of an arm of the load-bearing structure to move the palletising device 100 between the gripping and deposit positions.
In such a case also, a rotational movement at the upper support 21 can be optionally provided to rotate the palletising device 100 about a vertical axis.

Or, the load-bearing structure can be that of an anthropomorphic robot, which provides for bringing the palletising device 100 between the layer gripping position and the layer deposit one, moving according to three or more degrees of freedom, for example said anthropomorphic robot comprising three to six rotational axes.

Generally speaking, the load-bearing structure of an anthropomorphic robot provides for making a plurality of movements that act on the palletising device 100, creating trajectories that are not necessarily rectilinear, but the result of a combination of the rotations on the various axes of the anthropomorphic robot.

According to an aspect of the invention, said palletising device 100 comprises an upper head 10 for gripping articles.

Said upper head 10 is configured to pick up a layer of articles from a pick up surface, said forming plane, and transfer it onto the top of the pallet in an ordered manner.

According to a preferred embodiment, said upper head 10 comprises a frame 2 equipped with the upper support 21 adapted to be coupled to a load-bearing structure.

Said upper head 10 preferably is a head of the pushing type according to what has been described in the prior art.

Indeed, it preferably comprises a support surface 3 adapted to supportingly receive the layer of articles.

According to a possible embodiment, said support surface 3 is configured to translate on said frame 2 between a position for supporting articles, and a position for unloading articles, defining an opening A in the lower portion of the frame 2.

As known to those skilled in the art, the support surface 3 can be of a flexible type, also referred to as a shutter support surface, or of a rigid type.

In the figures, a support surface 3 of the rigid type is illustrated, and configured to slide out from underneath the layer translating entirely to one side.

However, it is understood that any variations of the support surface 3 are included within the scope of protection of the invention as long as they enable the pushing of a layer of articles onto said support surface 3.

For example, the support surface 3 can be of the type divided into two halves and configured to slide each half to one side and the opposite side, opening centrally relative to the frame 2.

Also included within the scope of protection is a support surface 3 of the roller shutter type that can be rolled laterally to the frame 2.

A preferred embodiment provides for said upper head 10 to comprise retaining means 4 placed above the support surface 3 and adapted to peripherally grasp said layer of articles.

In particular, the pick-up and/or deposit of the layer of articles takes place by means of a relative movement between the support surface 3 and the retaining means 4 generating the sliding of the layer on an upper surface 30 of the support surface 3.

In fact, the loading of the objects on the upper head 10 provides for pushing the layer from a forming plane of the pelletising line to the support surface 3.

For example, to perform said operation, pushing means that are independent of the upper head 10can be present, usually mounted at the forming plane and which provide for loading the layer of products by pushing them onto the support surface 3.

Alternatively, the loading of the objects on the upper head 10 takes place by the retaining means 4 housed on the same upper head 10.

In particular, the retaining means 4 can be configured to translate on said frame 2 between a position entirely inside the frame 2 and a position at least partly outside the frame 2 for picking up and/or releasing articles.

Preferably, by means of one or more telescopic means, 45 the retaining means 4 exit as needed from the upper head 10 and, by centering themselves on the layer, call it back onto the support surface 3.

Therefore, in that case the upper head 10 is brought close to the layer of articles stationed on the forming plane, with the retaining means 4 cantilevered relative to the upper head 10 ready to go and perimetrically embrace the layer.

Subsequently, the upper head 10 is lowered so that the retaining means 4 center the articles to be picked up, and then the retaining means 4 are called back inside the upper head 10, bringing the layer of articles with it, which thus will pass onto the support surface 3 of the upper head 10.

Herein below, we outline a possible working cycle:
- With the upper head 10, the pick-up area is reached, with the retaining means 4 cantilevered and the support surface 3 in such a position as to close the opening A of the lower portion of the frame 2;
- By lowering the upper head 10, the layer of articles is centered with the retaining means 4, while bringing the support surface 3 to the same height as the forming plane;
- The retaining means 4 are called back inside the upper head 10, thereby dragging the layer onto the support surface 3;
- The load-bearing structure moves to shift the palletizing device 100 from the pick up position to the deposit position, positioning itself above the pallet being formed:
- The layer is kept in place on the support surface 3 using the retaining means 4, and the upper head 10 is lowered until the support surface 3 is brought just a few centimetres above the upper surface of the pallet being formed;
- the support surface 3 translates on the frame 2 in such a position as to define the opening A in the lower portion of the frame 2, which allows the layer to be discharged by dropping.

Said retaining means 4 can be shaped differently as a function of the type of article to be handled. Generally, the retaining means 4 comprise side rails 41 arranged on the four sides.

Said side rails 41 can either be of the type with a fixed central wire or they can move in pairs, symmetrically approaching or moving away from the centre of the upper head 10.

Or they can be of the type with a fixed lateral wire, i.e., the side rails 41 comprise two fixed rails 41 that keep two sides of the layer unchanged in position and two movable rails 41 configured to move towards or away from the two fixed rails 41.

In particular, said retaining means 4 serve the purpose of both centering the layer during the pick up phase and during the deposition phase onto the pallet.

It is the object of the invention said device 1 that further comprises a lower head 20 for gripping articles, preferably removably connected to the upper head 10, for picking up a layer of articles arranged below the support surface 3.

Preferably, said lower head 20 falls within the type of gripping heads as described in the known art.

Preferably, the palletising device 100 comprises an upper head 10 and a lower head 20 configured to pick up articles differently.

In such a manner, the articles that cannot be handled with the upper pushing head 10 can be handled with the lower gripping head 20, and vice versa.

The upper head 10 for gripping articles and the lower head 20 for gripping articles preferably operate alternately.

I.e., when the lower head 20 operates, the upper head 10 is not operating.

Vice versa, when the upper head 10 operates, the lower head 20 is not operating and in that case it is preferably uninstalled.

According to an aspect of the invention, said lower head 20 comprises a structure 5 onto which a plurality of gripping elements 51 are installed, which are adapted to engage with the articles, assuming a pick-up configuration of said articles and adapted to disengage with the articles, assuming a release configuration.

The generally known gripping heads have a plurality of gripping elements 51.

Said gripping elements 51 generally contact each article of the layer.

Said gripping elements 51 are generally adapted to hold each article in a suspended manner, i.e., without the article being supported.

As illustrated in the figures, the gripping elements 51 preferably are inflatable tubes 52 adapted to position themselves between rows of the layer articles and assume a pick-up configuration of said articles when subjected to inflation and a release configuration when subjected to deflation.

The inflatable tubes 52 are widely used for palletizing layers of bottles.

Said inflatable tubes 52 are preferably positioned between the rows of the layer of articles, in particular between the necks of the bottles.

Alternatively, various types of gripping heads can be installed depending on the type of article with which they have to engage.

Other known heads, for example used to palletise jars, comprise, as the gripping elements, a plurality of clamps adapted to insert for example into the mouth of each jar of the layer, or alternatively a plurality of suction cups adapted to insert into each jar and grip the bottom of the jar or create a vacuum at the mouth of the jar.

For the bottles, heads are also known that comprise, as gripping elements, a plurality of inflatable bells that, upon inflation, embrace the neck of each bottle.

Therefore, any variations in the type of lower head 20 are considered to fall within the scope of protection of the invention.

The lower head 20 preferably comprises pneumatic means 25 to actuate the gripping elements 51, for example the inflatable tubes 52, and allow transitioning from the gripping configuration to the release configuration.

Said pneumatic means 25, not fully represented in the figure, can comprise pumps, fittings, tubing, valves, and everything known to those skilled in the art to activate the gripping elements 51.

According to an embodiment, said lower head 20 is movable with respect to the upper head 10 between a position at which it is entirely inside the encumbrance area of the frame 2, and a position at which it is at least partially projecting laterally to the frame 2.

This allows for a greater flexibility in adding the pick-up and deposit positions of the layer.

Particularly with a rotating column load-bearing structure, there isn't always the flexibility of movement to reach the working positions, and therefore this additional translation enables an increase in positioning possibilities.

Said lower head 20 preferably comprises a counter-frame 6 connected to the frame 2 and configured to removably receive the structure 5.

In the figures, a possible embodiment is illustrated, where the structure 5 comprises connecting means 55 configured to connect the structure 5 to the counter-frame 6 in a suspended manner.

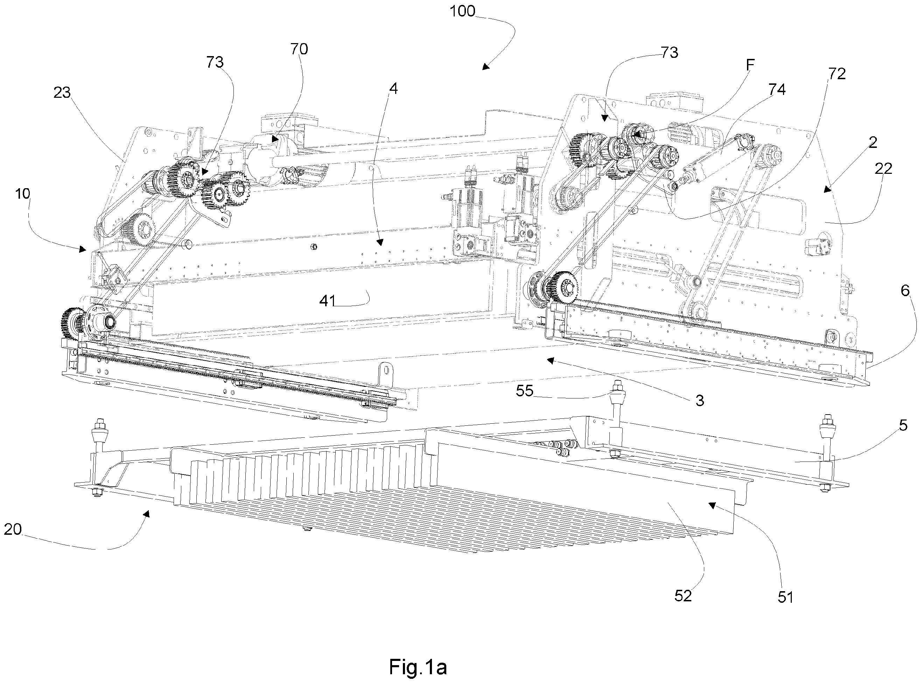

Said connecting means 55 represented in Fig. 1a comprise a frusto-conical portion that is particularly functional for adapting the lower head 20 to potential inclinations in the gripping, besides allowing the proper insertion of the gripping elements 51 in the articles.

Said solution is also particularly functional to make the assembly/disassembly of the lower head 20 on the counter-frame 6 practical.

Herein below, we outline a possible working cycle of the palletizing device 100 when the lower head 20 is in operation:
- The load-bearing structure locates the lower head 20 in the pick up area with the gripping elements 51 above the articles; the lower head 20 can be entirely inside the encumbrance area of the frame 2 and a position at which is at least partially projecting laterally to the frame 2;
- The palletising device 100 is lowered so that the gripping elements 51 insert in the articles until reaching the gripping position. In the case of inflatable tubes 52, the palletising device 100 descends until when the inflatable tubes 52 are between the rows of articles preferably flanked to the necks and up to the vicinity of the shoulder of the bottles.
- The gripping elements 51 are activated by actuating the pneumatic means 25 so that all the articles of the layer are held;
- The load-bearing structure moves the palletising device 100 with the articles in presa from the pick up position to the deposit position, bringing it above the pallet being formed;
- If needed, it can be arranged to translate the lower head 20 in a position at which it is at least partially projecting laterally to the frame 2;
- The load-bearing structure moves the palletising device 100 in a vertical direction to bring the articles, which are hold by the lower head 20, to be supported by those on top of the pallet;
- The gripping elements 51 are deactivated by actuating the pneumatic means 25 so that all the articles of the layer are released.

By virtue of the connection means 55 described above, it is possible to bring the articles to be supported onto the pallet for the deposit thereof, without weighting down on the mechanical parts of the palletising device or the load-bearing structure.

According to a preferred form, said counter-frame 6 can translate relative to the frame 2.

In particular, the counter-frame 6 is configured to perform a telescopic translation.

The counter-frame 6 preferably comprises a first beam 61 slidable on the frame 2 and a second beam 62 slidable on said first beam 61.

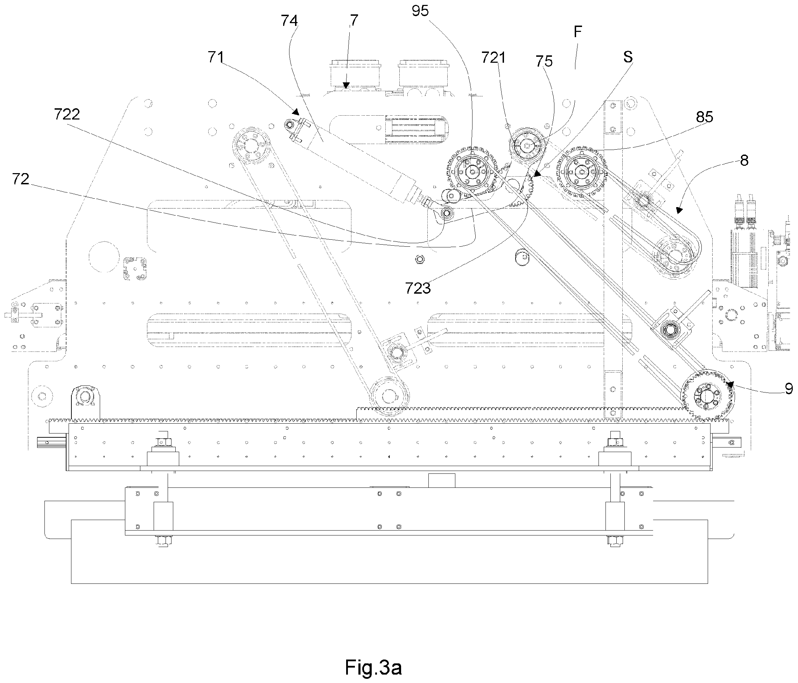

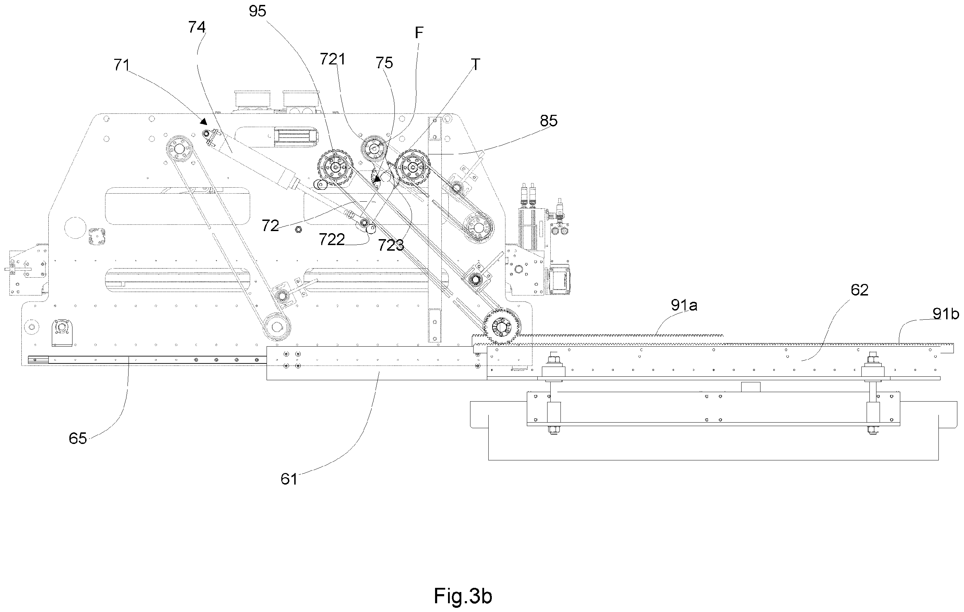

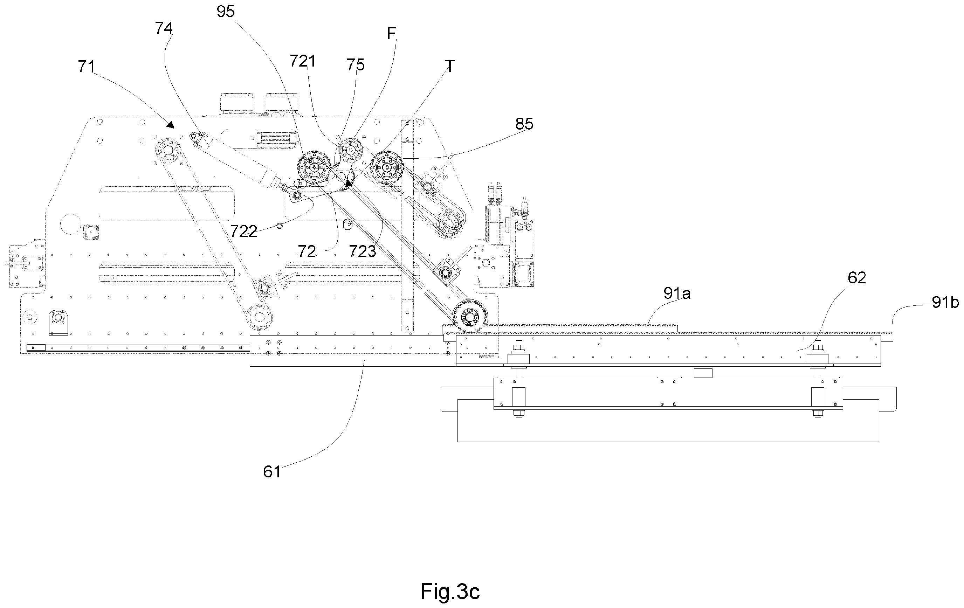

As illustrated in Figs. 3b, 3c, said first beam 61 can be configured to perform half of the translation stroke with respect to the second beam 62.

By virtue of this solution, the translation of the lower head 20 can be increased while keeping a working arm sufficient to compensate for the weight of the part that projects from the frame 2.

An aspect of the invention provides for the device 100 to comprise drive means 7 placed on the frame 2.

Said drive means 7 comprise a motor 70, preferably of the asynchronous or brushless type, and motorized members 73 such as gears or pulleys for transmitting the motion of the motor 70.

A preferred embodiment provides for the drive means 7 to be configured to drive the retaining means 4 and/or the lower head 20.

An embodiment illustrated in the figures provides for said drive means 7 to put in translation both the retaining means 4 and the lower head 20 in an alternative manner.

This allows to make a device 100 with a lower weight, which is crucial in reducing the manufacturing costs of the palletizer.

Said drive means 7 preferably further comprise an exchange element 71.

Said exchange element 71 is intended to operatively connect the drive means 7 with the retaining means 4 or alternatively with the lower head 20.

The palletising device 100 preferably comprises first transmission means 8 to put the retaining means 4 in translation.

Said first transmission means 8 are preferably positioned on two opposite flanks 22, 23 of the palletising device 100.

The palletising device 100 preferably comprises second transmission means 9 to put the lower head 20 in translation.

Said second transmission means 9 are preferably positioned on two opposite flanks 22, 23 of the palletising device 100.

In particular, said exchange element 71 is movable between a first position T, illustrated in Fig. 3c, at which it puts the motorized members 73 in connection with first transmission means 8 and a second position S, illustrated in Fig. 3b, at which it puts the motorized members 73 in connection with second transmission means 9.

Said exchange element 71 is preferably positioned on both the opposite flanks 22, 23 of the palletising device 100.

The exchange element 71 preferably comprises a lever 72 rotatable around a fulcrum F.

Said lever 72 preferably comprises a first end 721 connected to the fulcrum F, a central area 723 connected to an exchange gear 75 and preferably a second end 722 connected to a cylinder 74.

As illustrated in the figures, the lever 72 can be shaped with an inclination change at the central area 723.

Said cylinder 74 can be for example of a pneumatic, or electric type, etc.

In particular, said cylinder 74 passing from the extended position to the retracted position, rotates the lever 72 causing the exchange gear 75 to engage with a corresponding first gear 85 of the first transmission means 8, or to engage with a corresponding second gear 95 of the second transmission means 9.

This allows, with a simple solution, to take advantage of the drive means 7 for the operation of either the upper head 10 or the operation of the lower head 20

In fact, as described above, the two heads 10, 20, preferably do not operate at the same time, but instead in an alternate manner.

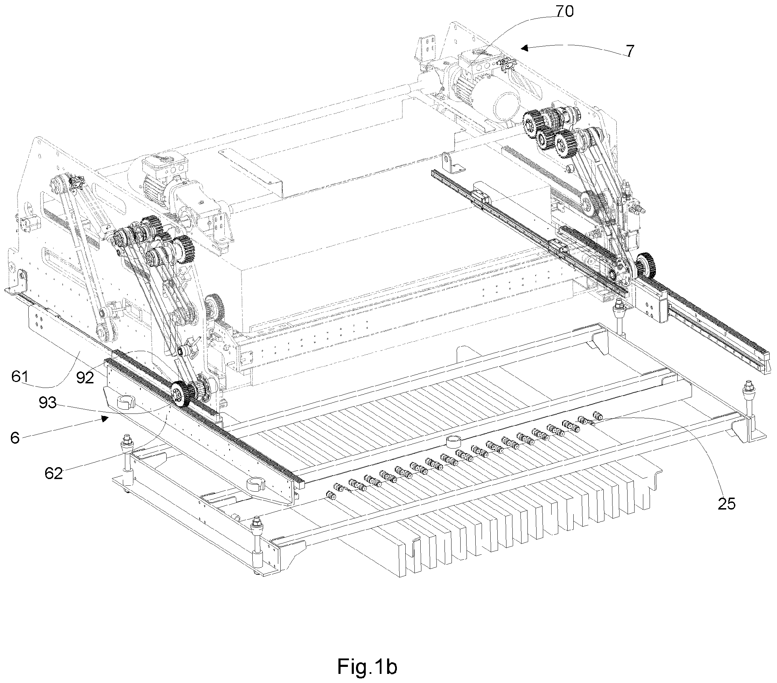

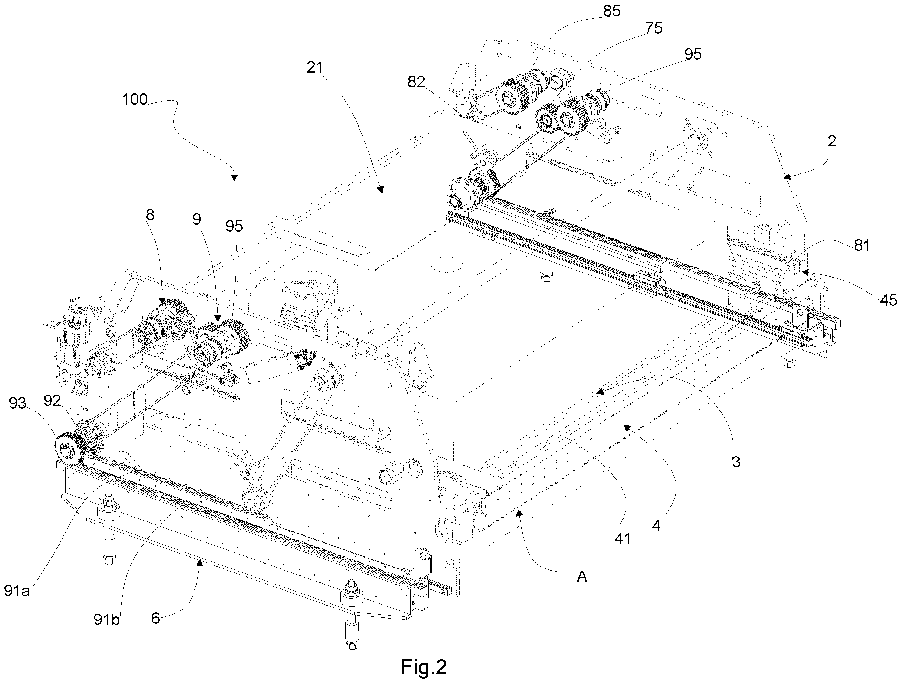

In Figs. 1b and 2 a preferred embodiment is illustrated, which provides for the second transmission means 9 to comprise a primary rack 91a and a secondary rack 91b mechanically associated with the counter-frame 6 and that engage with a third gear 92 and a fourth gear 93 operatively connected with the second gear 95, respectively.

The construction details to make so that the third gear 92 or the fourth gear 93 are operatively connected with the second gear 95 are not described, as they can involve belts, pulleys, shafts, etc, known to those skilled in the art and an example of which is outlined in the Figures.

In particular, the primary rack 91a is integral with the first beam 61 and the secondary rack 91b is integral with the second beam 62.

This allows to perform the telescopic translation of the lower head 20 as described above.

The secondary rack 91b preferably has a length substantially double that of the primary rack 91a. This allows to perform a double stroke of the lower head 20.

To complete said solution, the second head 20 can comprise guide means 65 of the telescopic type mechanically associated with the counter-frame 6.

The construction details can be realized according to several variants known to those skilled in the art and not described, but falling within the scope of protection of the invention.

The first transmission means 8 can comprise one or more racks 81 mechanically associated to the retaining means 4 and engaging a gear 82 operatively connected to the first gear 85. The possible implementation solutions are many and known those skilled in the art and therefore not described in detail, but falling within the scope of protection of the invention.

In any case, it is intended that what has been described herein above has an exemplary, non-limiting value; therefore, any variations of details that could be necessary due to technical and/or functional reasons are considered henceforth to fall within the same scope of protection defined by the claims set forth below.

## Claims

1. Palletising device (100) for picking up, transferring and depositing a layer of articles, comprising an upper head (10) for gripping articles, in turn comprising a frame (2) provided with an upper support (21) adapted to be coupled to a load-bearing structure, a support surface (3) adapted to supportingly receive the layer of articles, retaining means (4) placed above the support surface (3) and adapted to peripherally grasp said layer of articles, wherein the pick-up and/or deposit of the layer of articles occurs by means of a relative movement between the support surface (3) and the retaining means (4) generating the sliding of the layer on an upper surface (30) of the support surface (3), **characterized in that** said device (100) comprises a lower head (20) for gripping articles, preferably removably connected to the upper head (10), for picking up a layer of articles arranged below the support surface (3).

2. Palletising device (100) according to claim 1, wherein the lower head (20) comprises a structure (5) on which are installed a plurality of gripping elements (51) adapted to engage with the articles, assuming a pick-up configuration of said articles and adapted to disengage with the articles, assuming a release configuration, and preferably being adapted to retain them in a suspended manner.

3. Palletising device (100) according to claim 2, wherein the gripping elements (51) are inflatable tubes (52) adapted to position themselves between rows of the layer articles and assume a pick-up configuration of said articles when subjected to inflation and a release configuration when subjected to deflation.

4. Palletising device (100) according to any one of the preceding claims, wherein the lower head (20) is movable with respect to the upper head (10) between a position in which it is entirely inside the encumbrance area of the frame (2) and a position in which it is at least partially protruding laterally to the frame (2).

5. Palletising device (100) according to any one of the preceding claims, wherein the lower head (20) comprises a counter-frame (6) connected to the frame (2) and configured to preferably removably receive the structure (5) and to translate with respect to the frame (2)

6. Palletising device (100) according to any one of the preceding claims, wherein the upper head (10) for gripping articles and the lower head (20) for gripping articles operate alternately.

7. Palletising device (100) according to any one of the preceding claims, wherein the support surface (3) is configured to translate on said frame (2) between a position for supporting articles, and a position for unloading articles, defining an opening (A) in the lower portion of the frame (2).

8. Palletising device (100) according to any one of the preceding claims, wherein the retaining means (4) are configured to translate on said frame (2) between a position entirely inside the frame (2) and a position at least partly outside the frame (2) for picking up and/or releasing articles.

9. Palletising device (100) according to any one of the preceding claims, comprising drive means (7) placed on the frame (2) and configured to drive the retaining means (4) and/or the lower head (20).

10. Palletising device (100) according to claim 9, wherein the drive means (7) comprise an exchange element (71) movable between a first position (T) in which it connects the drive means (7) with first transmission means (8) to put the retaining means (4) in translation and a second position (S) in which it connects the drive means (7) with second transmission means (9) to put the lower head (20) in translation.

11. Palletising device (100) according to claim 10, wherein the exchange element (71) comprises a lever (72) rotatable around a fulcrum (F), said lever (72) comprising a first end (721) connected to the fulcrum (F), a central area (723) connected to an exchange gear (75) and a second end (722) connected to a cylinder (74), preferably pneumatic, in which passing from the extended position to the retracted position, rotates the lever (72) causing the exchange gear (75) to engage with a corresponding first gear (85) of the first transmission means (8) or to engage with a corresponding second gear (95) of the second transmission means (9).

12. Palletising device (100) according to any one of claims 5 to 11, wherein the counter-frame (6) is configured to perform a telescopic translation.
